# EUROPÄISCHE PATENTSCHRIFT

(11) **EP 1 559 354 B1**
(45) Veröffentlichungstag und Bekanntmachung des Hinweises auf die Patenterteilung: **13.06.2007**
(21) Anmeldenummer: 04021810.9
(22) Anmeldetag: 14.09.2004
(51) Int. Cl.: A47J 36/12, A47J 27/13, A47J 36/16

(54) **Kochsystem mit Deckel**
Cooking system with lid
Système de cuisson avec couvercle

(30) Priorität: 29.01.2004 DE 202004001276 U
(43) Veröffentlichungstag der Anmeldung: 03.08.2005
(73) Patentinhaber: Silit-Werke GmbH & Co. KG, 88499 Riedlingen (DE)
(72) Erfinder: Roth, Klaus, 88527 Uhnlingen (DE); Groezinger, Roland, 88471 Laupheim (DE)
(74) Vertreter: Tönhardt, Marion

(56) Entgegenhaltungen:
- DE-U1- 29 811 228
- GB-A- 127 125
- GB-A- 392 304

## Beschreibung

Die Erfindung betrifft ein Kochsystem aus Geschirren, wie Töpfe, Pfannen, Kasserollen, Sauteusen und dergleichen, mit Deckel.

Kochgeschirre uns Kochsysteme sind seit langem auf dem Mark. Dort sind beispielsweise Töpfe und Zubehörteile aufeinander abgestimmt und untereinander kombinierbar. Es sind auch Kochsysteme bekannt, bei denen Töpfe und Einsätze platzsparend stapelbar sind.

Während des Kochvorganges ist es oftmals das Problem, den Deckel für das Kochgeschirr abzulegen, wenn gerührt oder probiert werden soll. Koch- und Vorbereitungsflächen sind durch Lebensmittelreste verunreinigt, die sich, würde der Deckel dort abgelegt, auf das zu kochende Gut übertragen können. Auf Holzflächen abgelegte Deckel können oftmals unschöne Spuren kondensierten Kochwassers hinterlassen.

Die GB-A-392 304 offenbart einen Deckel für Kochgeschirr, wobei auf der inneren Seite des Deckels ein Vorsprung mit einem Scheitel vorgesehen ist. Ein kegelförmiges Teil ist koaxial mit seinem Scheitel an dem Scheitel des Vorsprungs befestigt. Der Deckel weist eine Krempe mit gleichbleibendem Radius auf.

Die DE 298 11 228 U1 betrifft ein Einhängevorrichtung für Deckel von Buffetgefäßen. Dabei weist ein Klemmteil, das als Gegenhalter mit einer Schraube an dem Deckel befestigt ist, eine Lasche auf, die zu ihrem freien Ende hin einen sich vergrößernden Abstand zum Deckel hat und das Herunterrutschen des Deckels verhindern sowie das Einhängen erleichtern soll. Der Schaft ist nicht rotationssymmetrisch, damit ein Wegrollen verhindert wird.

Es ist daher die Aufgabe der vorliegenden Erfindung ein Kochsystem aus mindestens zwei Kochgeschirren, wie Töpfe, Kasserollen, Pfannen, Sauteusen und dergleichen zur Verfügung zu stellen, wobei ein Kochgeschirr der mindestens zwei Kochgeschirre einen leicht verringerten Durchmesser hat und in das andere Kochgeschirr eingesetzt werden kann, mit Deckel, wobei der Deckel, der auf der im Gebrauch zum Kochgeschirr weisenden Seite einen Vorsprung mit einem Kragen aufweist, der als den Schüttrand des Kochgeschirrs übergreifender Aufsatz ausgebildet ist, und, wenn das Kochgeschirr offen benötigt wird, einfach untergebracht werden kann und ein einheitlicher Deckel ist, der wahlweise jedes der mindestens zwei Kochgeschirre verschließen kann.

Diese Aufgabe wird durch ein Kochgeschirr nach Anspruch 1 gelöst. Vorteilhafte Ausgestaltungen sind Gegenstand der darauf rückbezogenen Unteransprüche.

Erfindungsgemäß ist vorgesehen, daß das Kochgeschirr mit dem kleineren Durchmesser mit einem radial auskragenden Schüttrand versehen ist, um den Durchmesserausgleich für den Deckel herbeizuführen und, um den Deckel stabil am Kochgeschirr zu halten, daß der Kragen mit einer Fase versehen ist, die an die Kontur des Schüttrandes des Kochgeschirres angepaßt ist. Durch diese Gestaltung kann der Deckel, wenn er vom Kochgeschirr abgenommen ist, einfach auf den Rand des Kochgeschirrs aufgesetzt werden, wobei der Vorsprung mit dem Kragen sozusagen den "Haken" oder einen Einhängenoppen bildet.

Das Kochgeschirr kann weiterhin mindestens ein Hilfsgeschirr umfassen, wie eine Rührschüssel, einen Pastaeinsatz oder einen Dünsteinsatz, wobei diese in dem Kochgeschirr gestapelt unterbringbar sind.

Weiterhin kann das Hilfsgeschirr Griffelemente aufweisen, die über den Schüttrand des Kochgeschirrs oder der Kochgeschirre hinausragen.

Besonders vorteilhaft ist es, wenn der Deckel eine am Deckelrand umlaufende Schwitzwasserrinne aufweist, in der sich, wenn der Deckel in vertikaler Position am Kochgeschirr hängt, das kondensierte Kochwasser sammeln kann.

Der Deckel weist weiterhin vorteilhaft an der Schwitzwasserrinne einen sich im Gebrauch ins Innere des Kochgeschirrs erstreckenden Flansch auf, der dafür sorgt, daß der Deckel auf dem Kochtopf zentriert wird.

In herstellungstechnischer Hinsicht ist es vorteilhaft, den Vorsprung mit dem Kragen einstükkig auszubilden, beispielsweise als tiefgezogenes Blechteil, als Blechstanzbiegeteil oder auch als Vollmaterial zu bilden, das dann in dem Deckel eingeschweißt wird.

Das Blechteil kann tulpen- oder kelchartig ausgebildet sein.

Wenn ineinander stapelbare Kochgeschirre, wie Töpfe, Pfannen, Kasserollen, Sauteusen und dergleichen so gestaltet werden, daß gemäß der vorliegenden Erfindung der Schüttranddurchmesser aller Kochgeschirre im wesentlichen identisch ist, so genügt grundsätzlich ein einziger Deckel, um wahlweise die Kochgeschirre zu verschließen.

Im folgenden soll die Erfindung anhand der beigefügten Zeichnungen näher erläutert werden. Es zeigt:
- Figur 1: eine schematisierte Darstellung eines Kochgeschirrs mit einem Deckel gemäß einer Ausführungsform der vorliegenden Erfindung;
- Figur 2: das Kochgeschirr mit am Kochgeschirrand eingehängtem Deckel;
- Figur 3: ineinander stapelbare Kochgeschirre mit einem Deckel nach einer Ausführungsform der vorliegenden Erfindung;
- Figur 4: ein Kochgeschirr mit darin einsetzbarem Dünsteinsatz, verschließbar mit einem Dekkel gemäß der vorliegenden Erfindung;
- Figur 5: ein Kochgeschirr mit einem Pastaeinsatz, ebenfalls verschließbar mit einem Deckel gemäß der vorliegenden Erfindung;
- Figur 6: ein Kochsystem im Aufbewahrungszustand mit diversen Einsätzen; und
- Figur 7: das Kochsystem mit ungestapelten Einsätze und Töpfen.

Die vorliegende Erfindung wird im Nachfolgenden mit Bezug auf einen Topf bzw. auf Töpfe als Kochgeschirr beschrieben. Es versteht sich, daß das Kochgeschirr beispielsweise auch eine Stielkasserolle, eine Sauteuse, eine Pfanne oder dergleichen sein kann.

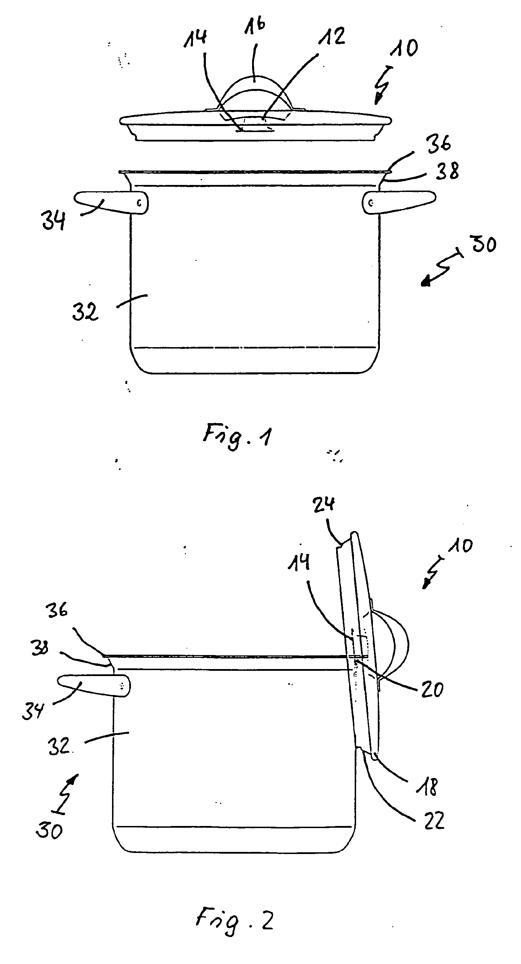

In Figur 1 ist ein Deckel 10 gemäß einer bevorzugten Ausführungsform der Erfindung dargestellt, der auf einer zu einem Kochgeschirr 30 hinweisenden Seite einen Vorsprung 12 mit daran anschließendem Kragen 14 aufweist. Vorsprung 12 und Kragen 14 sind mittig im Dekkel angeordnet. Der Deckel 10 weist weiterhin einen üblichen Griff 16 auf, der auch als Knopf ausgebildet sein kann. Das Kochgeschirr 30 besteht in üblicher Weise aus einem Körper 32, an dem einander gegenüberstehend Griffe 34 angebracht sind. An dem oberen Ende des Körpers 32 befindet sich eine radiale Auskragung 38, die den Schüttrand 36 definiert.

Figur 2 zeigt das Kochgeschirr 30 mit eingehängtem Deckel 10. Der Kragen 14 weist eine Fase 20 auf, die so gestaltet ist, daß sie der radialen Auskragung 38 angepaßt ist, so daß der Deckel 10 stabil über den Schüttrand 36 gehängt werden kann. Der Deckel 10 stützt sich weiterhin mit einem umlaufenden Flansch 22 am Körper des Kochgeschirrs 30 ab. Der Flansch 22, abgestuft ausgebildet, sorgt auch dafür, daß bei leicht abweichenden Schüttranddurchmessern der Deckel 10 sicher auf dem Kochgeschirr 30 zentriert ist. Der Deckel 10 ist weiterhin so geformt, daß eine am Deckelrand umlaufende Schwitzwasserrinne 18 gebildet wird, in der sich Kondenswasser aus dem Deckelinneren sammeln kann.

Figur 3 zeigt zwei ineinander stapelbare Kochgeschirre 30, 40, wobei das Kochgeschirr 30 einen gegenüber dem des Kochgeschirrs 40 leicht verringerten Durchmesser hat, so daß es problemlos in das Kochgeschirr 40 eingesetzt werden kann. Die Kochgeschirre 30 und 40 können mit ein und demselben Deckel 10 verwendet werden, wobei zum Ausgleich des Schüttranddurchmessers die radiale Abschrägung 38 des Kochgeschirrs 30 entsprechend gewählt ist.

Figur 4 zeigt, wie ein Kochgeschirr 30 mit einem Dünsteinsatz 42 verwendet werden kann, wobei der Deckel gemäß der vorliegenden Erfindung auch in den Dünsteinsatz 42 zu setzen ist, um den Topf bzw. das Kochgeschirr zu verschließen. Wieder sorgt der abgeschrägte Flansch 22 mit der Stufe 24 dafür, daß eine gewisse Anpassung an unterschiedliche Durchmesser von Dünsteinsatz bzw. Kochgeschirr 30 erfolgen kann.

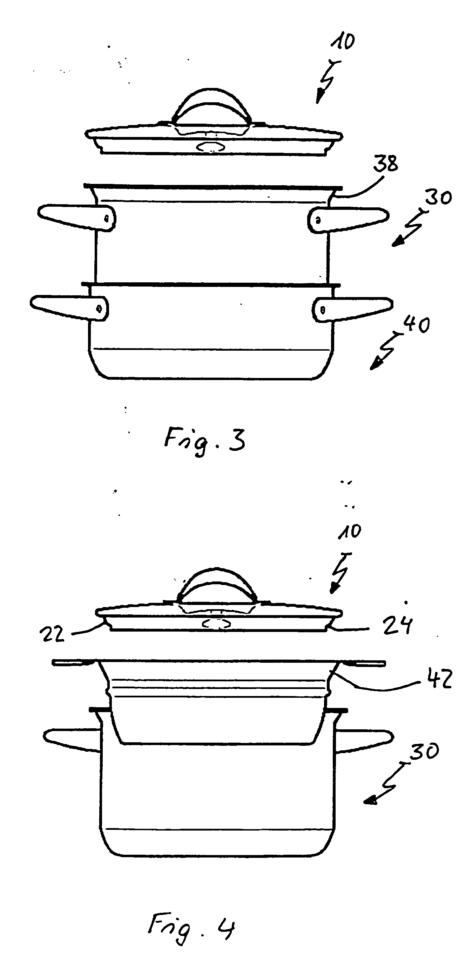

Ein weiteres Beispiel ist in Figur 5 gezeigt, wo ein Pastaeinsatz 44 in das Kochgeschirr 30 gesetzt ist, wobei auch der Pastaeinsatz 44 in seinen Konturen an den Deckel 10 angepaßt ist.

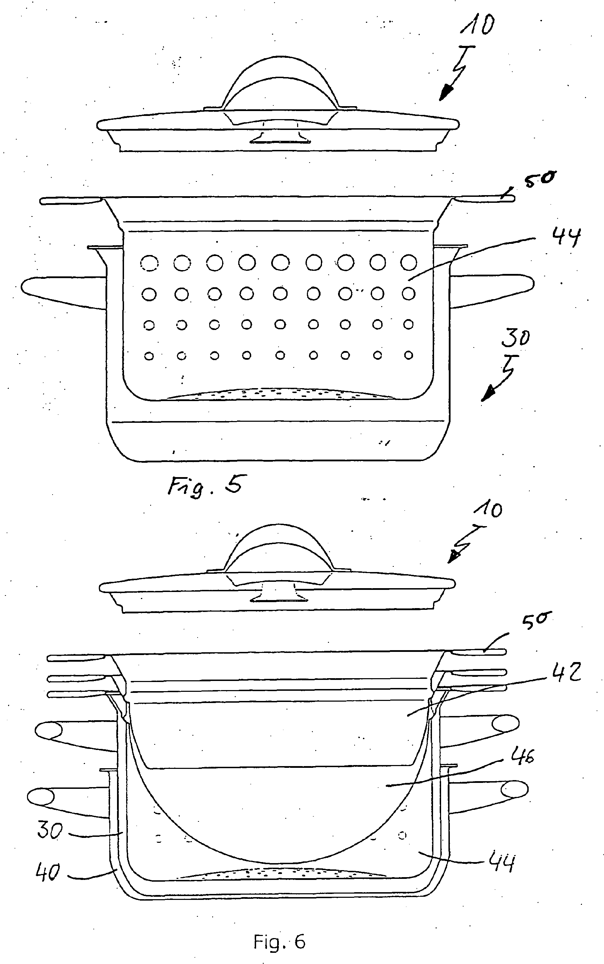

Schließlich zeigt Figur 6, wie ein Kochsystem gemäß der vorliegenden Erfindung platzsparend aufbewahrt werden kann. In das Kochgeschirr 30 werden die verschiedenen Einsätze, wie Dünsteinsatz 42, Rührschüssel 46 oder Pastaeinsatz 44, gestapelt eingelegt, die Anordnung wird mit dem Deckel 10 verschlossen. Das Kochgeschirr 30 wiederum kann in das höhere Kochgeschirr 40 gestellt werden.

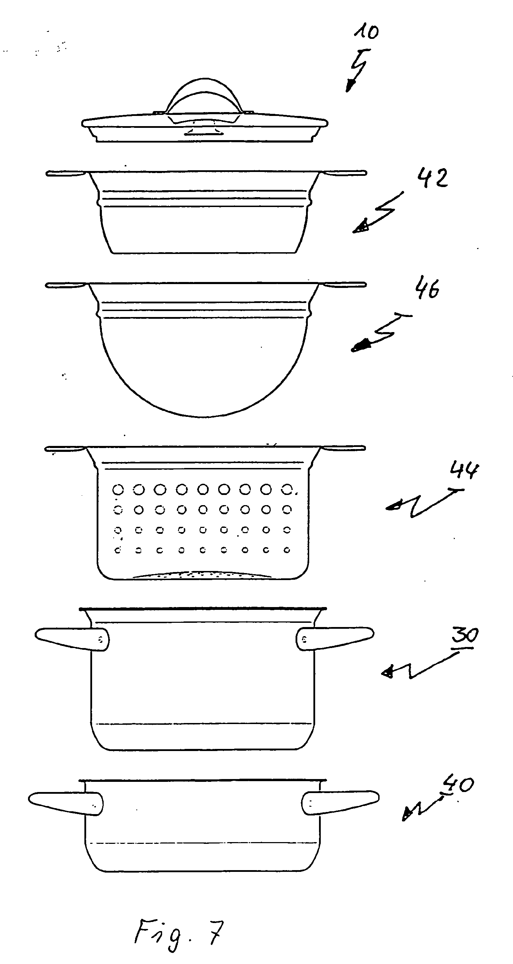

Schließlich zeigt zur Verdeutlichung die Figur 7 das Kochsystem ungestapelt mit Kochgeschirr 40, Kochgeschirr 30, Pastaeinsatz 44, Rührschüssel 46, Dünsteinsatz 42 und Deckel 10.

## Patentansprüche

1. Kochsystem aus mindestens zwei Kochgeschirren, wie Töpfe, Pfannen, Kasserollen, Sauteusen und dergleichen, wobei ein Kochgeschirr der mindestens zwei Kochgeschirre einen leicht verringerten Durchmesser hat und in das andere Kochgeschirr eingesetzt werden kann, mit Deckel, wobei auf der im Gebrauch zum Kochgeschirr (30) weisenden Seite des Deckels (10) ein Vorsprung (12) mit einem Kragen (14) vorgesehen ist, der als einen Schüttrand (36) des Kochgeschirrs (30) übergreifender Aufsatz ausgebildet ist, **dadurch gekennzeichnet, daß** das Kochgeschirr mit dem leicht verringerten Durchmesser eine radiale Auskragung (38) hat, so daß die Durchmesser der Schüttränder (36) aller Kochgeschirre im wesentlichen identisch sind und von einem einheitlichen Deckel (10) wahlweise verschließbar sind und der Kragen (14) eine Fase (20) aufweist, die an die radiale Auskragung (38) des Schüttrandes (36) des Kochgeschirres (30) angepaßt ist.

2. Kochsystem nach Anspruch 1, das weiterhin mindestens ein Hilfsgeschirr, wie eine Rührschüssel (46), einen Pastaeinsatz (44) oder einen Dünsteinsatz (42), umfaßt, wobei diese in dem Kochgeschirr (30) gestapelt unterbringbar sind.

3. Kochsystem nach einem der Ansprüche 1 bis 2, **dadurch gekennzeichnet, daß** das Hilfsgeschirr (42, 44, 46) Griffelemente (50) aufweist, die über den Schüttrand des Kochgeschirres (30) oder der Kochgeschirre hinausragen.

4. Kochsystem nach einem der vorangegangenen Ansprüche, **dadurch gekennzeichnet, daß** eine am Rand des Deckels umlaufende Schwitzwasserrinne (18) vorgesehen ist.

5. Kochsystem nach einem der vorangegangenen Ansprüche, **dadurch gekennzeichnet, daß** die Schwitzwasserrinne (18) einen sich im Gebrauch ins Innere des Kochgeschirrs (30) erstreckenden Flansch (22) aufweist, der mit einer radial einwärts laufenden Stufe (24) versehen ist.

6. Kochsystem nach einem der vorangegangenen Ansprüche, **dadurch gekennzeichnet, daß** der Vorsprung (12) mit dem Kragen (14) des Deckels einstückig ausgebildet ist, beispielsweise als tiefgezogenes Blechteil, als Blechstanzbiegeteil oder auch als Vollmaterialteil, das in den Deckel (10) eingeschweißt ist.

7. Kochsystem nach einem der vorangegangenen Ansprüche, **dadurch gekennzeichnet, daß** das Blechteil tulpen- oder kelchartig ausgebildet ist.

## Claims

1. Cooking system comprising at least two cooking vessels, such as pots, pans, casseroles, frying pans and the like, in which one of the at least two cooking vessels has a slightly reduced diameter and can be inserted into the other cooking vessel, and having a lid, that side of the lid (10) which is oriented towards the cooking vessel (30) during use having a protrusion (12) with a collar (14), which is designed as an attachment which engages over a pouring edge (36) of the cooking vessel (30), **characterized in that** the cooking vessel with the slightly reduced diameter has a radial projection (38), so that the diameters of the pouring edges (36) of all the cooking vessels are essentially identical and can be closed optionally by a one-fit lid (10), and the collar (14) has a chamfer (20) which is adapted to the radial projection (38) of the pouring edge (36) of the cooking vessel (30).

2. Cooking system according to Claim 1, which further comprises at least one auxiliary vessel, such as a mixing bowl (46), a pasta insert (44) or a steamer insert (42), it being possible for these to be accommodated in a stacked state in the cooking vessel (30).

3. Cooking system according to either of Claims 1 and 2, **characterized in that** the auxiliary vessel (42, 44, 46) has handle elements (50), which project beyond the pouring edge of the cooking vessel (30) or of the cooking vessels.

4. Cooking system according to one of the preceding claims, **characterized by** the provision of a condensation channel (18) running all the way around the edge of the lid.

5. Cooking system according to one of the preceding claims, **characterized in that** the condensation channel (18) has a flange (22) which extends into the interior of the cooking vessel (30) during use and is provided with a radially inwardly running step (24).

6. Cooking system according to one of the preceding claims, **characterized in that** the protrusion (12) is formed integrally with the collar (14) of the lid, for example as a deep-drawn sheet-metal part, as a punched and bent sheet-metal part or as a solid-material part which is welded into the lid (10).

7. Cooking system according to one of the preceding claims, **characterized in that** the sheet-metal part is of tulip-like or goblet-like design.

## Revendications

1. Système de cuisson constitué d'au moins deux ustensiles de cuisson, comme des marmites, poêles, casseroles, sauteuses et similaires, dans lequel un premier ustensile de cuisson parmi les au moins deux ustensiles de cuisson a un diamètre légèrement inférieur, et peut être placé dans l'autre ustensile de cuisson, muni d'un couvercle, dans lequel une partie faisant saillie (12) munie d'un rebord (14) est agencée sur le côté du couvercle (10) dirigé vers l'ustensile de cuisson (30) en utilisation, qui est formé comme un bord verseur (36) de la couronne faisant saillie de l'ustensile de cuisson (30), **caractérisé en ce que** l'ustensile de cuisson ayant le diamètre légèrement inférieur comporte un surplomb radial (38), de sorte que les diamètres des bords verseurs (36) de tous les ustensiles de cuisson sont sensiblement identiques et peuvent facultativement être obturés par un couvercle unitaire (10), et le rebord (14) comporte un biseau (20) qui est adapté au surplomb radial (38) du bord verseur (36) de l'ustensile de cuisson (30).

2. Système de cuisson selon la revendication 1, comprenant de plus au moins un ustensile accessoire, comme une cuve d'agitation (46), un panier pour les pâtes (44) ou un panier à étuver (42), ceux-ci pouvant être empilés dans l'ustensile de cuisson (30).

3. Système de cuisson selon l'une quelconque des revendications 1 à 2, **caractérisé en ce que** l'ustensile accessoire (42, 44, 46) comporte des éléments de préhension (50) qui dépassent sur le bord verseur de l'ustensile de cuisson (30) ou des ustensiles de cuisson.

4. Système de cuisson selon l'une quelconque des revendications précédentes, **caractérisé en ce qu'**une gorge (18) pour l'eau de condensation est prévue sur le bord du couvercle.

5. Système de cuisson selon l'une quelconque des revendications précédentes, **caractérisé en ce que** la gorge (18) pour l'eau de condensation comporte une bride (22) positionnée en utilisation à l'intérieur de l'ustensile de cuisson (30), et munie d'un gradin (24) dirigé radialement vers l'intérieur.

6. Système de cuisson selon l'une quelconque des revendications précédentes, **caractérisé en ce que** la partie faisant saillie (12) est formée en un seul bloc avec le rebord (14) du couvercle, par exemple en tant que partie en tôle emboutie, en tant que partie en tôle estampée, ou aussi en tant que partie en matière pleine, qui est soudée dans le couvercle (10).

7. Système de cuisson selon l'une quelconque des revendications précédentes, **caractérisé en ce que** la tôle est formée en forme de tulipe ou de coupe.
